(19)

Europäisches
Patentamt
European
Patent Office
Office européen
des brevets

(11) **EP 4 748 796 A1**

(12) **EUROPEAN PATENT APPLICATION**

(43) Date of publication:
**27.05.2026 Bulletin 2026/22**

(21) Application number: **25210749.5**

(22) Date of filing: **23.10.2025**

(51) International Patent Classification (IPC):
**C01G 53/42** (2025.01)    **H01M 4/525** (2010.01)

(52) Cooperative Patent Classification (CPC):
**C01G 53/42; H01M 4/525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.11.2024 US 202418946780**

(71) Applicant: **Tesla, Inc.**
**Austin, TX 78725 (US)**

(72) Inventors:
• **WANG, Siwei**
 **Austin, 78725 (US)**

• CHEN, Ji
 **Austin, 78725 (US)**
• ZHENG, Lingling
 **Austin, 78725 (US)**
• YANG, Xiaoyun
 **Austin, 78725 (US)**
• MUTHUKUMAR, Siva Ram Kumar
 **Austin, 78725 (US)**

(74) Representative: **Zacco Sweden AB**
**P.O. Box 5581**
**Löjtnantsgatan 21**
**114 85 Stockholm (SE)**

(54) **METHODS OF PREPARING ELECTRODE ACTIVE MATERIALS BY HOMOGENIZATION OF PRECURSOR MIXTURES, AND PRODUCTS THEREOF**

(57)    A method for forming an electrode active material comprising mixing a lithium source and an active material precursor utilizing homogenization and sintering processes, and products thereof, are disclosed. Such a method utilizing large lithium source particles removes the need for milling lithium source particles, thereby achieving a cost-effective and simplified electrode active material production process.

FIG. 1

**Description**

INCORPORATION BY REFERENCE TO ANY PRIORITY APPLICATIONS

This application claims the benefit of priority to U.S. Patent Application No. 18/946,780, entitled "METHODS OF PREPARING ELECTRODE ACTIVE MATERIALS BY HOMOGENIZATION OF PRECURSOR MIXTURES, AND PRODUCTS THEREOF," filed on November 13, 2024.

BACKGROUND

Some components used for production of energy storage devices include electrodes and electrolytes. Currently, electrode active materials (e.g., cathode active materials) are produced by sintering precursor mixtures of a lithium source (e.g., lithium hydroxide) and active material precursors (e.g., metal oxides). Incumbent industrial methods to produce high performance electrode active materials typically include reducing and/or homogenizing the particle sizes of starting materials (e.g., by milling) prior to sintering, which increases the time and costs associated with electrode active material manufacturing.

As such, an improved methods to form electrode active materials are desired.

SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

In one aspect, a method of forming an electrode active material is described. The method includes: mixing lithium hydroxide and an active material precursor to form a precursor mixture, wherein the lithium hydroxide includes a $D_{50}$ particle size of at least about 150 $\mu$m; heating the precursor mixture at a homogenizing temperature to form a homogenized mixture; and sintering the homogenized mixture at a sintering temperature to form a final mixture including an electrode active material, wherein the homogenizing temperature is less than the sintering temperature.

In another aspect, a method of forming an electrode active material is described. The method includes: mixing a lithium source and an active material precursor to form a precursor mixture, wherein the lithium source includes a $D_{50}$ particle size of at least about 150 $\mu$m; heating the precursor mixture at a homogenizing temperature to form a homogenized mixture; and sintering the homogenized mixture at a sintering temperature to form a final mixture including an electrode active material, wherein the homogenizing temperature is less than the sintering temperature.

In some embodiments, the lithium source is selected from lithium hydroxide (LiOH), lithium hydroxide monohydrate (LiOH•$H_2O$), lithium carbonate ($Li_2CO_3$), $LiPO_3$, $Li_3PO_3$, $Li_3PO_4$, $LiH_2PO_4$, $Li_2HPO_4$, $LiH_2PO_3$, $Li_2HPO_3$, and combinations thereof.

In some embodiments, the homogenizing temperature is about 250-500°C. In some embodiments, heating is performed for about 0.1-3 hours. In some embodiments, the method further includes preheating the precursor mixture at a preheating temperature, wherein the preheating temperature is less than the homogenizing temperature and the sintering temperature. In some embodiments, the preheating temperature is about 200-300°C. In some embodiments, the precursor mixture is preheated at the preheating temperature for about 0.1-3 hours. In some embodiments, the sintering temperature is about 700-900°C. In some embodiments, the final mixture is sintered at the sintering temperature for about 8-14 hours.

In some embodiments, the electrode active material includes at most about 5 wt.% excess lithium source. In some embodiments, the electrode active material includes a $D_{50}$ particle size distribution of about 2-8 $\mu$m. In some embodiments, the electrode active material is a cathode active material. In some embodiments, the cathode active material is selected from the group consisting of a metal oxide, metal sulfide, a sulfur-carbon composite, a lithium metal oxide, a material including sulfur, and combinations thereof. In some embodiments, the cathode active material is selected from the group consisting of a lithium iron phosphate, lithium manganese iron phosphate, lithium nickel manganese cobalt oxide, lithium nickel cobalt aluminum oxide, lithium manganese oxide, lithium nickel manganese oxide, lithium cobalt oxide, and combinations thereof. In some embodiments, mixing of the lithium source and the active material precursor to form the precursor mixture is performed by low-shear mixing.

In another aspect, a method of forming an electrode film is described. The method includes: forming an electrode active material, combining the electrode active material with a binder to form an electrode film mixture; and forming an electrode film from the electrode film mixture.

In another aspect, a method of forming an energy storage device is described. The method includes: forming an electrode film, forming a cathode including disposing the electrode film over a current collector; and disposing the cathode, an anode, and an electrolyte within a housing to form the energy storage device.

In another aspect, a precursor mixture used to form an electrode active material is disclosed. The precursor mixture includes: a lithium source, wherein the lithium source includes a $D_{50}$ particle size of at least about 150 $\mu$m; and an active material precursor.

In some embodiments, the lithium source includes a $D_{50}$ particle size of about 150-800 $\mu$m. In some embodiments, the active material precursor includes a $D_{50}$ particle size of about 2-20 $\mu$m. In some embodiments, the active material precursor is selected from the group consisting of a metal hydroxide, a metal oxide, lithium mixed metal oxides, and combinations thereof. In some embodiments, the active material precursor includes a metal element selected from the group consisting of nickel, manganese, cobalt, aluminum, magnesium, zirconium, yttrium, titanium, vanadium, molybdenum, and combinations thereof.

BRIEF DESCRIPTION OF THE DRAWINGS

FIG. 1 is a flowchart showing a method of forming an electrode active material, according to some embodiments.

FIG. 2A is a schematic illustration showing a process of forming an electrode active material with a lithium source.

FIG. 2B is a schematic illustration showing a process of forming an electrode active material with a lithium source comprising lithium source particles of various sizes.

FIG. 2C is a schematic illustration showing a process of forming an electrode active material by homogenization with a lithium source, according to some embodiments.

FIG. 3 is a graph showing thermogravimetric analysis (TGA) and differential scanning calorimetry (DSC) of a precursor mixture, according to some embodiments.

FIG. 4A is a scanning electron microscopy (SEM) image of a precursor mixture formed with unmilled lithium hydroxide using constant mixing intensities and durations, according to some embodiments.

FIG. 4B is an SEM image of a precursor mixture formed with unmilled lithium hydroxide using reduced mixing intensities and durations, according to some embodiments.

FIG. 5A is an SEM image of an electrode active material formed with milled lithium hydroxide, according to some embodiments.

FIG. 5B is an SEM image of an over-lithiated electrode active material formed with unmilled lithium hydroxide, according to some embodiments.

FIG. 5C is an SEM image of an under-lithiated electrode active material formed with unmilled lithium hydroxide, according to some embodiments.

FIG. 5D is an SEM image of an electrode active material formed by homogenization with unmilled lithium hydroxide, according to some embodiments.

It will be clearly understood though, that the examples and figures are for illustrative purpose only, and are not necessarily restrictive of the scope of the present invention.

DETAILED DESCRIPTION

Although certain preferred embodiments and examples are disclosed below, the inventive subject matter extends beyond the specifically disclosed embodiments to other alternative embodiments and/or uses and to modifications and equivalents thereof. Thus, the scope of the claims appended hereto is not limited by any of the particular embodiments described below. For example, in any method or process disclosed herein, the acts or operations of the method or process may be performed in any suitable sequence and are not necessarily limited to any particular disclosed sequence. Various operations may be described as multiple discrete operations, in turn, in a manner that may be helpful in understanding certain embodiments; however, the order of description should not be construed to imply that these operations are order-dependent. Additionally, the structures, systems, and/or devices described herein may be embodied as integrated components or as separate components. For purposes of comparing various embodiments, certain aspects and advantages of these embodiments are described. Not necessarily all such aspects or advantages are achieved by any particular embodiment. Thus, for example, various embodiments may be carried out in a manner that achieves or optimizes one advantage or group of advantages as taught herein without necessarily achieving other aspects or advantages as may also be taught or suggested herein.

Methods to form electrode active materials by homogenizing precursor mixtures are described. A precursor mixture comprising starting materials (e.g., unmilled materials) may be subjected to homogenization, wherein the precursor mixture is heated or baked at a homogenization temperature for a period of time to form a homogenized mixture. The homogenized mixture may then be sintered at a sintering temperature for a period of time to form an electrode active material. In some embodiments, prior to homogenization, the precursor mixture may be preheated at a preheating temperature. In some embodiments, preheating and/or homogenizing and sintering consecutively is referred to as an in-situ heating process.

The precursor mixture includes starting materials, wherein the starting materials include a lithium source and an active material precursor, and optionally a dopant material additive. In some embodiments, the precursor mixture and/or a starting material comprises unmilled materials (e.g., an unmilled starting material, an unmilled lithium source and/or an unmilled active material precursor), wherein the unmilled materials may include materials that have not been significantly processed (e.g., milled, crushed). In some embodiments, unmilled materials may include materials that have been pre-processed (e.g., previously milled and/or crushed) prior to purchasing the material product from a supplier and/or vendor. In some embodiments, the precursor mixture, the starting material and/or the unmilled material have a $D_{50}$ particle size distribution of, of about, of at least, or of at least about, 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, 30 $\mu$m, 40 $\mu$m, 50 $\mu$m, 60 $\mu$m, 70 $\mu$m, 80 $\mu$m, 90 $\mu$m, 100 $\mu$m, 110 $\mu$m, 120 $\mu$m, 130 $\mu$m, 140 $\mu$m, 150 $\mu$m, 160 $\mu$m, 170 $\mu$m, 180 $\mu$m, 190 $\mu$m, 200 $\mu$m, 210 $\mu$m, 220 $\mu$m, 230 $\mu$m, 240 $\mu$m, 250 $\mu$m, 260 $\mu$m, 270 $\mu$m, 280 $\mu$m, 290 $\mu$m, 300 $\mu$m, 310 $\mu$m, 320 $\mu$m, 330 $\mu$m, 340 $\mu$m, 350 $\mu$m, 360 $\mu$m, 370 $\mu$m, 380 $\mu$m, 390 $\mu$m, 400 $\mu$m, 410 $\mu$m, 420 $\mu$m, 430 $\mu$m, 440 $\mu$m, 450 $\mu$m, 460 $\mu$m, 470 $\mu$m, 480 $\mu$m, 490 $\mu$m, 500 $\mu$m, 510 $\mu$m, 520 $\mu$m, 530 $\mu$m, 540 $\mu$m, 550 $\mu$m, 560 $\mu$m, 570 $\mu$m, 580 $\mu$m, 590 $\mu$m, 600 $\mu$m, 610 $\mu$m, 620 $\mu$m, 630 $\mu$m, 640 $\mu$m, 650 $\mu$m, 660 $\mu$m, 670 $\mu$m, 680 $\mu$m, 690 $\mu$m and 700 $\mu$m, or any range of values therebetween. In some embodiments, a milled material (e.g., further milled after receiving the purchased product) may be used to form precursor mixtures.

Methods of Forming a Precursor Mixture and an Electrode Active Material

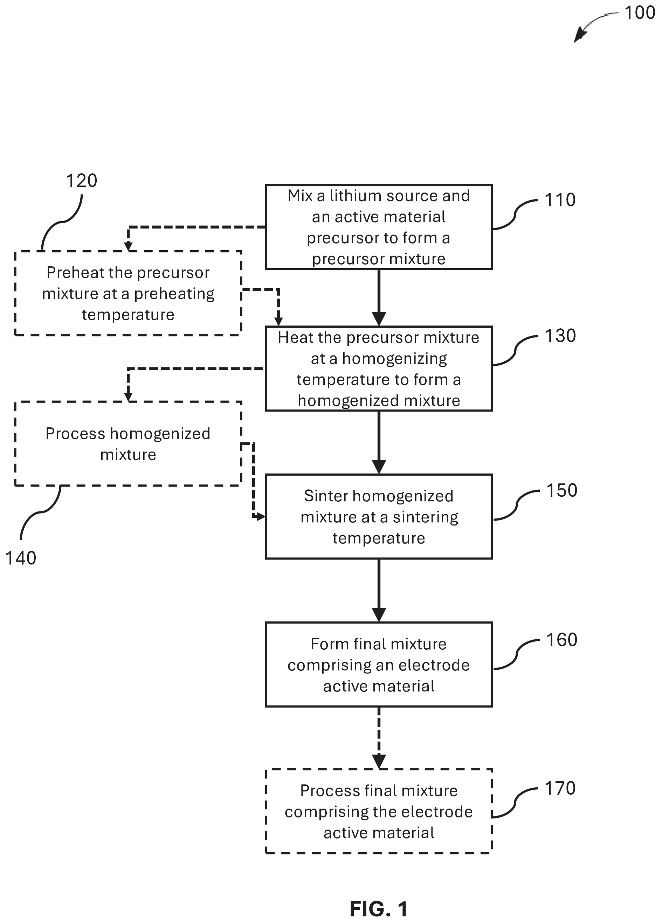

FIG. 1 is a flowchart showing a method 100 of forming an electrode active material. As illustrated in FIG. 1, a lithium source and an active material precursor is mixed to form a precursor mixture in step 110. In step 130, the precursor mixture is heated at a homogenizing temperature to form a homogenized mixture. Prior to the heating of the precursor mixture at the homogenizing temperature in step 130, the precursor mixture may be preheated at a preheating temperature in optional step 120. In step 150, the homogenized mixture is sintered at a sintering temperature to form a final mixture comprising an electrode active material in step 160. Prior to the sintering of the homogenized mixture in step 150, the homogenized mixture may be processed (e.g., crushed, milled, washed, filtrated, dried, and/or mixed) in optional step 140. In addition, after forming the final mixture in step 160, the final mixture comprising the electrode active material may be processed (e.g., crushing, milling, washing, filtrating, drying, additive mixing, additional heating and/or combinations thereof) in optional step 170.

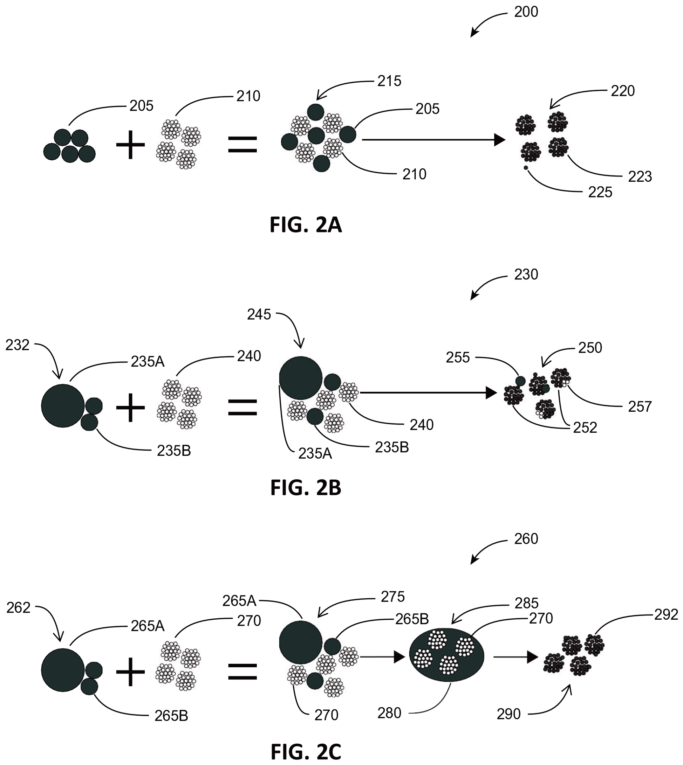

FIG. 2A is a schematic illustration showing a process 200 of forming an electrode active material 220 with a lithium source 205 and an active material precursor 210, wherein the particle sizes of the lithium source 205 are similar to that of the active material precursor 210 particles. In addition, the active material precursor 210 particles are shown as secondary particles including a plurality of primary particles. In process 200, the lithium source 205 is mixed with an active material precursor 210 to form a precursor mixture 215. The precursor mixture 215 is sintered to form a uniformly lithiated electrode active material mixture 223 with small traces of unreacted excess lithium source particles 225.

FIG. 2B is a schematic illustration showing a process 230 of forming an electrode active material 250 with a lithium source 232 comprising larger lithium source particles 235A and smaller lithium source particles 235B, and an active material precursor 240, wherein the larger lithium source particles 235A are significantly larger than that of the active material precursor 240 particles. In process 230, the lithium source 232 is mixed with an active material precursor 240 to form a precursor mixture 245. The precursor mixture 245 is sintered to form an electrode active material mixture 252 with fully-lithiated active material particles with large traces of unreacted excess lithium source particles 255 and under-lithiated active material particles 257.

FIG. 2C is a schematic illustration showing a process 260 of forming an electrode active material 290 by homogenization with a lithium source 262 comprising larger lithium source particles 265A and smaller lithium source particles 265B, and an active material precursor 270, wherein the larger lithium source particles 265A are significantly larger than that of the active material precursor 270 particles. In process 260, the lithium source 262 is mixed with an active material precursor 270 to form a precursor mixture 275. The precursor mixture 275 is heated to a homogenizing temperature to form a melt of lithium source 280 to coat and/or encase the active material precursor 270 thereby forming a homogenized mixture 285. The homogenized mixture 285 is further sintered to form a uniformly lithiated electrode active material mixture 292.

In some embodiments, the lithium source may be in particle form (e.g., powder). In some embodiments, the lithium source is a lithium source hydrate. In some embodiments, the lithium source is selected from lithium hydroxide (LiOH) (e.g., lithium hydroxide monohydrate ($LiOH \cdot H_2O$)), lithium carbonate ($Li_2CO_3$), $LiPO_3$, $Li_3PO_3$, $Li_3PO_4$, $LiH_2PO_4$, $Li_2HPO_4$, $LiH_2PO_3$, $Li_2HPO_3$, and combinations thereof. In some embodiments, mixing of the lithium source, the active material precursor and/or the dopant material additive to form the precursor mixture is performed by low-shear mixing and/or high-shear mixing.

In some embodiments, the lithium source is lithium hydroxide (LiOH) or lithium hydroxide monohydrate (LiOH•$H_2$O). In some embodiments, the lithium hydroxide is a pre-purchased material product and/or without any additional milling.

In some embodiments, a $D_{50}$ particle size distribution of the lithium source is or is significantly larger than a $D_{50}$ particle size distribution of the active material precursor. In some embodiments, the ratio of the $D_{50}$ particle size distribution of the lithium source:active material precursor is, is about, is at least, or is at least about, 1:99, 2:98, 3:97, 4:96, 5:95, 6:94, 7:93, 8:92, 9:91, 10:90, 11:89, 12:88, 13:87, 14:86, 15:85, 16:84, 17:83, 18:82, 19:81, 20:80, 21:79, 22:78, 23:77, 24:76, 25:75, 26:74, 27:73, 28:72, 29:71, 30:70, 31:69, 32:68, 33:67, 34:66, 35:65, 36:64, 37:63, 38:62, 39:61, 40:60, 41:59, 42:58, 43:57, 44:56, 45:55, 46:54, 47:53, 48:52, 49:51, 50:50, 51:49, 52:48, 53:47, 54:46, 55:45, 56:44, 57:43, 58:42, 59:41, 60:40, 61:39, 62:38, 63:37, 64:36, 65:35, 66:34, 67:33, 68:32, 69:31, 70:30, 71:29, 72:28, 73:27, 74:26, 75:25, 76:24, 77:23, 78:22, 79:21, 80:20, 81:19, 82:18, 83:17, 84:16, 85:15, 86:14, 87:13, 88:12, 89:11, 90:10, 91:9, 92:8, 93:7, 94:6, 95:5, 96:4, 97:3, 98:2 and 99:1, or any range of values therebetween.

In some embodiments, the lithium source (e.g., lithium hydroxide, lithium hydroxide powder, lithium hydroxide monohydrate, lithium hydroxide monohydrate powder) includes a $D_{50}$ particle size distribution of, of about, at least, or at least about, 100 µm, 110 µm, 120 µm, 130 µm, 140 µm, 150 µm, 155 µm, 160 µm, 165 µm, 170 µm, 175 µm, 180 µm, 185 µm, 190 µm, 195 µm, 200 µm, 205 µm, 210 µm, 215 µm, 220 µm, 225 µm, 230 µm, 235 µm, 240 µm, 245 µm, 250 µm, 255 µm, 260 µm, 265 µm, 270 µm, 275 µm, 280 µm, 285 µm, 290 µm, 295 µm, 300 µm, 305 µm, 310 µm, 315 µm, 320 µm, 325 µm, 330 µm, 335 µm, 340 µm, 345 µm, 350 µm, 355 µm, 360 µm, 365 µm, 370 µm, 375 µm, 380 µm, 385 µm, 390 µm, 395 µm, 400 µm, 405 µm, 410 µm, 415 µm, 420 µm, 425 µm, 430 µm, 435 µm, 440 µm, 445 µm, 450 µm, 455 µm, 460 µm, 465 µm, 470 µm, 475 µm, 480 µm, 485 µm, 490 µm, 495 µm, 500 µm, 505 µm, 510 µm, 515 µm, 520 µm, 525 µm, 530 µm, 535 µm, 540 µm, 545 µm, 550 µm, 555 µm, 560 µm, 565 µm, 570 µm, 575 µm, 580 µm, 585 µm, 590 µm, 595 µm, 600 µm, 605 µm, 610 µm, 615 µm, 620 µm, 625 µm, 630 µm, 635 µm, 640 µm, 645 µm, 650 µm, 655 µm, 660 µm, 665 µm, 670 µm, 675 µm, 680 µm, 685 µm, 690 µm, 695 µm, 700 µm, 705 µm, 710 µm, 715 µm, 720 µm, 725 µm, 730 µm, 735 µm, 740 µm, 745 µm, 750 µm, 755 µm, 760 µm, 765 µm, 770 µm, 775 µm, 780 µm, 785 µm, 790 µm, 795 µm and 800 µm, or any range of values therebetween. For example, in some embodiments, the lithium hydroxide monohydrate powder includes a $D_{50}$ particle size distribution of about 150-800 µm.

In some embodiments, the active material precursor includes a $D_{50}$ particle size distribution of, of about, at least, or at least about, 0.1 µm, 0.6 µm, 1.1 µm, 1.6 µm, 2.1 µm, 2.6 µm, 3.1 µm, 3.6 µm, 4.1 µm, 4.6 µm, 5.1 µm, 5.6 µm, 6.1 µm, 6.6 µm, 7.1 µm, 7.6 µm, 8.1 µm, 8.6 µm, 9.1 µm, 9.6 µm, 10.1 µm, 10.6 µm, 11.1 µm, 11.6 µm, 12.1 µm, 12.6 µm, 13.1 µm, 13.6 µm, 14.1 µm, 14.6 µm, 15.1 µm, 15.6 µm, 16.1 µm, 16.6 µm, 17.1 µm, 17.6 µm, 18.1 µm, 18.6 µm, 19.1 µm, 19.6 µm, and 20 µm, or any range of values therebetween. For example, in some embodiments, the active material precursor includes a $D_{50}$ particle size distribution of about 4 µm. For example, in some embodiments, the active material precursor includes a $D_{50}$ particle size distribution of about 2-20 µm.

In some embodiments, the active material precursor is selected from the group consisting of a metal hydroxide ($M_x(OH)_n$), a metal oxide ($M_xO_n$), a metal oxide hydroxide ($MO(OH)$), a metal carbonate ($M_x(CO_3)_n$), and combinations thereof. In some embodiments, wherein "M" represents a metal and "x" and "n" are values which create a neutrally charged metal precursor. In some embodiments, the active material precursor comprises a metal element selected from the group consisting of nickel, manganese, cobalt, aluminum, magnesium, iron, zirconium, yttrium, titanium, vanadium, molybdenum, and combinations thereof. In some embodiments, the active material precursor is selected from a nickel manganese cobalt oxide precursor, a nickel cobalt aluminum oxide precursor, a manganese oxide precursor, a nickel manganese oxide precursor, a cobalt oxide precursor, a titanate precursor, or combinations thereof.

In some embodiments, the active material precursor comprises a polycrystalline structure. In some embodiments, the active material precursor comprises a monocrystalline structure.

In some embodiments, the precursor mixture includes a dopant material additive. In some embodiments, the dopant material additive includes a metal compound and/or a metalloid compound. In some embodiments, the metal compound and/or the metalloid compound is an acid (e.g., boric acid), an oxide, a hydroxide (e.g., cobalt hydroxide), or combinations thereof. In some embodiments, the metal compound and/or the metalloid compound includes an element selected from the group consisting of Al, Ca, B, Mg, Ti, Ta, Zr, Mo, W, Y, Co, Na, and combinations thereof.

In some embodiments, the active material precursor and the lithium source is mixed at a mixing intensity of, of about, of at most, or of at most about, 2000 rpm, 1750 rpm, 1500 rpm, 1250 rpm, 1000 rpm, 950 rpm, 900 rpm, 850 rpm, 800 rpm, 750 rpm, 700 rpm, 650 rpm, 600 rpm, 590 rpm, 580 rpm, 570 rpm, 560 rpm, 550 rpm, 540 rpm, 530 rpm, 520 rpm, 510 rpm, 500 rpm, 490 rpm, 480 rpm, 470 rpm, 460 rpm, 450 rpm, 440 rpm, 430 rpm, 420 rpm, 410 rpm, 400 rpm, 390 rpm, 380 rpm, 370 rpm, 360 rpm, 350 rpm, 340 rpm, 330 rpm, 320 rpm, 310 rpm, 300 rpm, 290 rpm, 280 rpm, 270 rpm, 260 rpm, 250 rpm, 240 rpm, 230 rpm, 220 rpm, 210 rpm, 200 rpm, 190 rpm, 180 rpm, 170 rpm, 160 rpm, 150 rpm, 140 rpm, 130 rpm, 120 rpm, 110 rpm, 100 rpm, 90 rpm, 80 rpm, 70 rpm, 60 rpm, 50 rpm, 40 rpm, 30 rpm, 20 rpm and 10 rpm, or any range of values therebetween. In some embodiments, the active material precursor and the lithium source is mixed at the mixing intensity for, for about, for at most, or for at most about 30 minutes, 29 minutes, 28 minutes, 27 minutes, 26 minutes, 25 minutes, 24 minutes, 23 minutes, 22 minutes, 21 minutes, 20 minutes, 19 minutes, 18 minutes, 17 minutes, 16 minutes, 15 minutes, 14 minutes, 13 minutes, 12 minutes, 11 minutes, 10 minutes, 9 minutes, 8 minutes, 7 minutes, 6 minutes, 5 minutes, 4 minutes, 3 minutes, 2 minutes and 1 minute, or any range of values therebetween.

The precursor mixture may be heated at a homogenizing temperature to form a homogenized mixture. In some embodiments, the homogenizing temperature may be less than the sintering temperature. In some embodiments, the homogenizing temperature is, is about, at least, at least about, at most, or at most about, 200°C, 205°C, 210°C, 215°C, 220°C, 225°C, 230°C, 235°C, 240°C, 245°C, 250°C, 255°C, 260°C, 265°C, 270°C, 275°C, 280°C, 285°C, 290°C, 295°C, 300°C, 305°C, 310°C, 315°C, 320°C, 325°C, 330°C, 335°C, 340°C, 345°C, 350°C, 355°C, 360°C, 365°C, 370°C, 375°C, 380°C, 385°C, 390°C, 395°C, 400°C, 405°C, 410°C, 415°C, 420°C, 425°C, 430°C, 435°C, 440°C, 445°C, 450°C, 455°C, 460°C, 465°C, 470°C, 475°C, 480°C, 485°C, 490°C, 495°C, 500°C, 505°C, 510°C, 515°C, 520°C, 525°C, 530°C, 535°C, 540°C, 545°C, 550°C, 555°C, 560°C, 565°C, 570°C, 575°C, 580°C, 585°C, 590°C, 595°C and 600°C, or any range of values therebetween. For example, in some embodiments, the homogenizing temperature is about 250-500°C. In some embodiments, at the homogenizing temperature, lithium hydroxide particles (e.g., the lithium hydroxide particles that have yet to be milled, larger and/or smaller lithium source particles) form a melt. In some embodiments, at the homogenizing temperature, the melt comprising lithium hydroxide particles may penetrate, encase, coat, and/or mix with the active material precursors to form the homogenized mixture.

In some embodiments, heating the precursor mixture at a homogenizing temperature to form the homogenized mixture may be performed for, for about, for at least, or for at least about, 0.1 hours, 0.2 hours, 0.3 hours, 0.4 hours, 0.5 hours, 0.6 hours, 0.7 hours, 0.8 hours, 0.9 hours, 1 hours, 1.1 hours, 1.2 hours, 1.3 hours, 1.4 hours, 1.5 hours, 1.6 hours, 1.7 hours, 1.8 hours, 1.9 hours, 2 hours, 2.1 hours, 2.2 hours, 2.3 hours, 2.4 hours, 2.5 hours, 2.6 hours, 2.7 hours, 2.8 hours, 2.9 hours, 3 hours, 3.1 hours, 3.2 hours, 3.3 hours, 3.4 hours, 3.5 hours, 3.6 hours, 3.7 hours, 3.8 hours, 3.9 hours and 4 hours, or any range of values therebetween. In some embodiments, heating is performed for about 0.1-3 hours. In some embodiments, the homogenized mixture may be processed by crushing, milling, washing, filtrating, drying, mixing, additive mixing and/or combinations thereof. In some embodiments, processing may include mixing the homogenized mixture with a dopant material additive.

In some embodiments, the precursor mixture may be preheated at a preheating temperature prior to heating at the homogenizing temperature, wherein the preheating temperature is less than the homogenizing temperature and/or the sintering temperature. In some embodiments, the precursor mixture may be preheated at a preheating temperature of, of about, of at least, of at least about, of at most, or of at most about, 100°C, 110°C, 120°C, 130°C, 140°C, 150°C, 160°C, 170°C, 180°C, 190°C, 200°C, 205°C, 210°C, 215°C, 220°C, 225°C, 230°C, 235°C, 240°C, 245°C, 250°C, 255°C, 260°C, 265°C, 270°C, 275°C, 280°C, 285°C, 290°C, 295°C, 300°C, 305°C, 310°C, 315°C, 320°C, 325°C, 330°C, 335°C, 340°C, 345°C, 350°C, 355°C, 360°C, 365°C, 370°C, 375°C, 380°C, 385°C, 390°C, 395°C and 400°C, or any range of values therebetween. In some embodiments, the precursor mixture comprises lithium source hydrate. In some embodiments, the preheating temperature is about 200-300°C. In some embodiments, water ($H_2O$) from the lithium hydroxide monohydrate is removed at the preheating temperature. In some embodiments, at the preheating temperature, lithium hydroxide particles may penetrate, encase, coat, and/or mix with the active material precursors.

In some embodiments, the precursor mixture is preheated at the preheating temperature for, for about, for at least, or for at least about, 0.1 hours, 0.2 hours, 0.3 hours, 0.4 hours, 0.5 hours, 0.6 hours, 0.7 hours, 0.8 hours, 0.9 hours, 1 hours, 1.1 hours, 1.2 hours, 1.3 hours, 1.4 hours, 1.5 hours, 1.6 hours, 1.7 hours, 1.8 hours, 1.9 hours, 2 hours, 2.1 hours, 2.2 hours, 2.3 hours, 2.4 hours, 2.5 hours, 2.6 hours, 2.7 hours, 2.8 hours, 2.9 hours, 3 hours, 3.1 hours, 3.2 hours, 3.3 hours, 3.4 hours, 3.5 hours, 3.6 hours, 3.7 hours, 3.8 hours, 3.9 hours and 4 hours, or any range of values therebetween. In some embodiments, preheating is performed for about 0.1-3 hours.

The homogenized mixture may be heated at a sintering temperature to form a final mixture comprising an electrode active material. In some embodiments, the sintering temperature is, is about, at least, at least about, at most, or at most about, 650°C, 655°C, 660°C, 665°C, 670°C, 675°C, 680°C, 685°C, 690°C, 695°C, 700°C, 705°C, 710°C, 715°C, 720°C, 725°C, 730°C, 735°C, 740°C, 745°C, 750°C, 755°C, 760°C, 765°C, 770°C, 775°C, 780°C, 785°C, 790°C, 795°C, 800°C, 805°C, 810°C, 815°C, 820°C, 825°C, 830°C, 835°C, 840°C, 845°C, 850°C, 855°C, 860°C, 865°C, 870°C, 875°C, 880°C, 885°C, 890°C, 895°C, 900°C, 905°C, 910°C, 915°C, 920°C, 925°C, 930°C, 935°C, 940°C, 945°C and 950°C, or any range of values therebetween. For example, in some embodiments, the sintering temperature is about 700-900°C. In another example, in some embodiments, the homogenized mixture comprising polycrystalline active material precursors are sintered at most about 800°C. In another example, in some embodiments, the homogenized mixture comprising monocrystalline active material precursors are sintered at about 750-850°C.

In some embodiments, the homogenized mixture may be sintered at the sintering temperature for, for about, for at least, or for at least about, 7 hours, 7.2 hours, 7.4 hours, 7.6 hours, 7.8 hours, 8 hours, 8.2 hours, 8.4 hours, 8.6 hours, 8.8 hours, 9 hours, 9.2 hours, 9.4 hours, 9.6 hours, 9.8 hours, 10 hours, 10.2 hours, 10.4 hours, 10.6 hours, 10.8 hours, 11 hours, 11.2 hours, 11.4 hours, 11.6 hours, 11.8 hours, 12 hours, 12.2 hours, 12.4 hours, 12.6 hours, 12.8 hours, 13 hours, 13.2 hours, 13.4 hours, 13.6 hours, 13.8 hours, 14 hours, 14.2 hours, 14.4 hours, 14.6 hours, 14.8 hours and 15 hours, or any range of values therebetween. For example, in some embodiments, sintering is performed for about 8-14 hours. In some embodiments, the final mixture comprising the electrode active material is formed after sintering the homogenized mixture. In some embodiments, the final mixture comprising the electrode active material may be processed by crushing, milling, washing, filtrating, drying, additive mixing, additional heating and/or combinations thereof. In some embodiments, processing may include mixing the final mixture with a dopant material additive to form a pre-doped mixture. In some embodiments, processing includes additionally heating the final mixture and/or pre-doped mixture at a preheating temperature, a homogenizing temperature, and/or a sintering temperature as described herein.

In some embodiments, the electrode active material may comprise an excess amount of the lithium source. In some embodiments, the electrode active material may comprise about, at most, or at most about, 10 wt.%, 9.8 wt.%, 9.6 wt.%, 9.4 wt.%, 9.2 wt.%, 9 wt.%, 8.8 wt.%, 8.6 wt.%, 8.4 wt.%, 8.2 wt.%, 8 wt.%, 7.8 wt.%, 7.6 wt.%, 7.4 wt.%, 7.2 wt.%, 7 wt.%, 6.8 wt.%, 6.6 wt.%, 6.4 wt.%, 6.2 wt.%, 6 wt.%, 5.8 wt.%, 5.6 wt.%, 5.4 wt.%, 5.2 wt.%, 5 wt.%, 4.8 wt.%, 4.6 wt.%, 4.4 wt.%, 4.2 wt.%, 4 wt.%, 3.8 wt.%, 3.6 wt.%, 3.4 wt.%, 3.2 wt.%, 3 wt.%, 2.8 wt.%, 2.6 wt.%, 2.4 wt.%, 2.2 wt.%, 2 wt.%, 1.8 wt.%, 1.6 wt.%, 1.4 wt.%, 1.2 wt.%, 1 wt.%, 0.8 wt.%, 0.6 wt.%, 0.4 wt.%, 0.2 wt.% and 0 wt.%, or any range of values therebetween, excess lithium hydroxide. For example, in some embodiments, the electrode active material comprises at most about 5 wt.% excess lithium hydroxide.

In some embodiments, the electrode active material may comprise excess or residual lithium source (e.g., $Li_2CO_3$ and/or LiOH) of, of about, of at most, or of at most about, 3500 ppm, 3520 ppm, 3540 ppm, 3560 ppm, 3580 ppm, 3600 ppm, 3620 ppm, 3640 ppm, 3660 ppm, 3680 ppm, 3700 ppm, 3720 ppm, 3740 ppm, 3760 ppm, 3780 ppm, 3800 ppm, 3820 ppm, 3840 ppm, 3860 ppm, 3880 ppm, 3900 ppm, 3920 ppm, 3940 ppm, 3960 ppm, 3980 ppm, 4000 ppm, 4020 ppm, 4040 ppm, 4060 ppm, 4080 ppm, 4100 ppm, 4120 ppm, 4140 ppm, 4160 ppm, 4180 ppm, 4200 ppm, 4220 ppm, 4240 ppm, 4260 ppm, 4280 ppm, 4300 ppm, 4320 ppm, 4340 ppm, 4360 ppm, 4380 ppm, 4400 ppm, 4420 ppm, 4440 ppm, 4460 ppm, 4480 ppm, 4500 ppm, 4520 ppm, 4540 ppm, 4560 ppm, 4580 ppm, 4600 ppm, 4620 ppm, 4640 ppm, 4660 ppm, 4680 ppm, 4700 ppm, 4720 ppm, 4740 ppm, 4760 ppm, 4780 ppm, 4800 ppm, 4820 ppm, 4840 ppm, 4860 ppm, 4880 ppm, 4900 ppm, 4920 ppm, 4940 ppm, 4960 ppm, 4980 ppm and 5000 ppm, or any range of values therebetween.

In some embodiments, the electrode active material may comprise a $D_{50}$ particle size distribution of, of about, of at least, or of at least about, 2 μm, 2.2 μm, 2.4 μm, 2.6 μm, 2.8 μm, 3 μm, 3.2 μm, 3.4 μm, 3.6 μm, 3.8 μm, 4 μm, 4.2 μm, 4.4 μm, 4.6 μm, 4.8 μm, 5 μm, 5.2 μm, 5.4 μm, 5.6 μm, 5.8 μm, 6 μm, 6.2 μm, 6.4 μm, 6.6 μm, 6.8 μm, 7 μm, 7.2 μm, 7.4 μm, 7.6 μm, 7.8 μm, 8 μm, 8.2 μm, 8.4 μm, 8.6 μm, 8.8 μm, 9 μm, 9.2 μm, 9.4 μm, 9.6 μm, 9.8 μm, 10 μm, 10.2 μm, 10.4 μm, 10.6 μm, 10.8 μm, 11 μm, 11.2 μm, 11.4 μm, 11.6 μm, 11.8 μm, 12 μm, 12.2 μm, 12.4 μm, 12.6 μm, 12.8 μm, 13 μm, 13.2 μm, 13.4 μm, 13.6 μm, 13.8 μm, 14 μm, 14.2 μm, 14.4 μm, 14.6 μm, 14.8 μm, 15 μm, 15.2 μm, 15.4 μm, 15.6 μm, 15.8 μm, 16 μm, 16.2 μm, 16.4 μm, 16.6 μm, 16.8 μm, 17 μm, 17.2 μm, 17.4 μm, 17.6 μm, 17.8 μm, 18 μm, 18.2 μm, 18.4 μm, 18.6 μm, 18.8 μm, 19 μm, 19.2 μm, 19.4 μm, 19.6 μm, 19.8 μm and 20 μm, or any range of values therebetween.

In some embodiments, the electrode active material is a cathode active material and/or an anode active material.

## Electrode Film Materials and Electrode Films

Electrode film mixtures and electrode films formed using an electrode active material are described herein. An electrode active material (e.g., cathode active material, anode active material) may be used in the preparation of electrode film mixture used to form an electrode film and/or electrode for an energy storage device.

In some embodiments, the active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., $LiFePO_4$ or "LFP"), lithium manganese iron phosphate (e.g., $LiMn_{0.6}Fe_{0.4}PO_4$ or "LMFP"), lithium nickel manganese cobalt oxide (i.e., $LiNi_xMn_yCo_{1-x-y}O_2$ or "NMC"), lithium nickel cobalt aluminum oxide (i.e., $LiNi_xCo_yAl_zO_2$ or "NCA"), lithium manganese oxide ("LMO"), lithium nickel manganese oxide ("LNMO"), lithium cobalt oxide ("LCO"), or combinations thereof. In some embodiments, the cathode active material includes at least two of LFP, LMFP, NMC, NCA, LMO, LNMO, LCO, and combinations thereof. In some embodiments, the cathode active material is an iron phosphate-based active material. In some embodiments, iron phosphate-based active materials include $LiFePO_4$ (i.e., "lithium iron phosphate" and "LFP") and $LiMn_{1-x}Fe_xPO_4$ (i.e., "lithium manganese iron phosphate" and "LMFP") (e.g., $LiMn_{0.6}Fe_{0.4}PO_4$ or $LiMn_{0.8}Fe_{0.2}PO_4$). In some embodiments, the iron phosphate-based active material includes LFP. In some embodiments, the iron phosphate-based active material includes an LMFP. In some embodiments, the iron phosphate-based active material includes an LFP and/or an LMFP.

In some embodiments, the active material is an anode active material. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.).

Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, the electrode film mixture and/or electrode film comprises the active material in an amount of, of about, of at least, or at least about, 70 wt.%, 75 wt.%, 80 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 98.5 wt.%, 99 wt.%, 99.5 wt.%, 99.8 wt.% or 99.9 wt.%, or any range of values therebetween.

In some embodiments, the electrode film mixture and/or electrode film comprises a carbon material configured to reversibly intercalate lithium ions. In some embodiments, the lithium intercalating carbon is selected from a graphitic carbon, graphite, hard carbon, soft carbon and combinations thereof. For example, the electrode film mixture and/or electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions. In some embodiments, the electrode comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween.

In some embodiments, electrode film mixture and/or electrode film includes a conductive additive. In some embodiments, the conductive additive may comprise a conductive carbon additive, such as a carbon black. In some embodiments, the conductive additive may comprise a conductive carbon additive. In some embodiments, the conductive carbon additive comprises carbon black, carbon nanotubes, such as single-walled carbon nanotubes (SWCNTs) and multi-walled carbon nanotubes (MWCNTs). In some embodiments, the electrode film mixture and/or electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film mixture and/or electrode film, or any range of values therebetween. In some embodiments, the conductive additive is carbon black.

In some embodiments, the electrode film mixture and/or electrode film includes a binder or binder material. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, nylon, modified nylon, polyimide, hydrogenated nitrile butadiene rubber (HNBR), co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the electrode film mixture and/or electrode film includes, includes about, includes at most, or includes at most about, 1 wt.%, 2 wt.%, 3 wt.%, 4 wt.%, 5 wt.%, 6 wt.%, 7 wt.%, 8 wt.%, 9 wt.%, 10 wt.%, or any range of values therebetween, of a binder.

In some embodiments, the electrode film can be a wet processed electrode film. In some embodiments, the electrode film is prepared by a wet or slurry-based electrode fabrication process. In some embodiments, the electrode film of the present disclosure can be a dry processed electrode film. In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particles active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the resulting active layer or electrode films are self-supporting films formed using the dry process from the dry particle mixture. In some embodiments, the resulting active layer or electrode films are free-standing films formed using the dry process from the dry particle mixture. A process for forming an active layer or electrode film can include fibrillizing the fibrillizable binder component(s) such that the film comprises fibrillized binder. In further embodiments, a free-standing active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, an electrode film is disposed on a current collector to form an electrode. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 $\mu$m, 100 $\mu$m, 50 $\mu$m, 40 $\mu$m, 30 $\mu$m, 20 $\mu$m, 15 $\mu$m, 10 $\mu$m, 5 $\mu$m, or any range of values therebetween.

Electrodes and Energy Storage Devices

Energy storage devices formed using electrodes comprising electrode films using electrode active materials are described herein. An energy storage system or device includes a positive electrode (i.e., cathode), a negative electrode (i.e., anode), a separator disposed therebetween, and an electrolyte positioned within a housing. Each electrode includes an electrode film disposed over a current collector. The electrode includes an electrode film disposed over a current collector. In some embodiments, the current collector is a foil. In some embodiments, the current collector is aluminum foil, a copper foil, or combinations thereof. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 $\mu$m, 100 $\mu$m, 50 $\mu$m, 40 $\mu$m, 30 $\mu$m, 20 $\mu$m, 15 $\mu$m, 10 $\mu$m, 5 $\mu$m, or any range of values therebetween. In some embodiments, an active layer is disposed on each side of the current collector.

In some embodiments, an electrode is a double-sided electrode. In some embodiments, the double-sided electrode includes two electrode films. In some embodiments, the double-sided electrode may include a current collector, a top electrode film, and a bottom electrode film. In some embodiments, each of the two electrode films can have any suitable shape, size and thickness.

In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode.

An electrode assembly includes a cathode, an anode, and a separator positioned between the anode and cathode. In some embodiments, the electrode assembly is a wound electrode (i.e., rolled electrode) assembly (e.g., a jelly roll). In some embodiments, the energy storage device is selected from the group consisting of a cylindrical energy storage device, a stacked prismatic energy storage device, and a spiral-wound prismatic energy storage device.

The normalized circularity may be used to determine and/or correlate to a relatively weak core spot (e.g., a spot that may cause electrode buckling) in the wound electrode assembly. Normalized circularity for a nonideal spiral is defined as the minimum ratio between the nonideal (real) geometry versus ideal geometry on a point-by-point basis according to the equation below.

$$Normalized\ Circularity = \min_{i=1,2,..,n} \left( \frac{Nonideal\ Spiral\ Geometry}{Ideal\ Spiral\ Geometry} \right)$$

The nonideal (real) spiral geometry is given by measured Cartesian and polar coordinates ($x,y,\theta,r$) and the ideal spiral geometry is derived from an Archimedean spiral according to $r = \alpha\theta + \beta$. The geometry of a spiral (ideal or nonideal) can be characterized by curvature (K), such as the polar curvature parameterization below.

$$K(\theta) = \frac{|r^2 + 2r'^2 - rr''|}{(r^2 + r'^2)^{3/2}}$$

In some embodiments, the electrode assembly comprises a normalized circularity value of, of about, of at least, or of at least about, 0.7, 0.705, 0.71, 0.715, 0.72, 0.725, 0.73, 0.735, 0.74, 0.745, 0.75, 0.76, 0.77, 0.78, 0.79, 0.8, 0.805, 0.81, 0.815, 0.82, 0.825, 0.83, 0.835, 0.84, 0.845, 0.85, 0.86, 0.87, 0.88, 0.89, 0.90, 0.91, 0.92, 0.93, 0.94, 0.95, 0.96, 0.97, 0.98, 0.99, 1, 1.05, 1.1, 1.15, 1.2 or any range of values therebetween.

The electrode disclosed herein may be used for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable lithium-containing electrolyte. For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate ($LiPF_6$), lithium bis(trifluoromethanesulfonyl)imide (LiFSI), lithium tetrafluoroborate ($LiBF_4$), lithium perchlorate ($LiClO_4$), lithium bis(trifluoromethansulfonyl)imide ($LiN(SO_2CF_3)_2$), lithium trifluoromethansulfonate ($LiSO_3CF_3$), lithium bis(oxalato)borate ($LiB(C_2O_4)_2$), lithium bis(fluorosulfonyl)imide ($LiN(SO_2F)_2$, lithium difluoro(oxalato)borate ($LiC_2BF_2O_4$) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,3-propene sultone (PRS), and combinations thereof. In some embodiments, the solvent can comprise an ester. In some embodiments, the ester is selected from methyl acetate (MA), methyl propionate (MP), ethyl acetate (EA), methyl butyrate (MB), and combinations thereof. In some embodiments, the solvent may include EC, PC, VEC, VC, FEC, DMC, DEC, EMC, MA, MP, EA, MB, and combinations thereof. In some embodiments, the solvent may include EC, DMC, DEC, EMC, MA, and combinations thereof. In some embodiments, the solvent may include EC, DMC, EMC, and combinations thereof. In some embodiments, the solvent may include a ratio of EC:DMC:EMC of 10-30:0-90:0-70.

In some embodiments, one or more solvents can be used at a concentration of, of about, of at least, or at least about, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. % or 90 wt. %, or any range of values therebetween. In some embodiments, solvents are utilized as additives in the electrolyte system, and can be used at a concentration of, of about, of at most, or at most about, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 1.1 wt. %, 1.2 wt. %, 1.3 wt. %, 1.4 wt. %, 1.5 wt. %, 1.6 wt. %, 1.7 wt. %, 1.8 wt. %, 1.9 wt. %, 2 wt. %, 2.1 wt. %, 2.2 wt. %, 2.3 wt. %, 2.4 wt. %, 2.5 wt. %, 2.6 wt. %, 2.7 wt. %, 2.8 wt. %, 2.9 wt. %, 3 wt. %, 4 wt. %, 5 wt. %, 6 wt. %, 7 wt. %, 8 wt. %, 9 wt. % or 10 wt. %, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments, where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

In some embodiments, the energy storage device is operated an applied voltage of about 2.5 V, 2.6 V, 2.7 V, 2.8 V, 2.9 V, 3 V, 3.1 V, 3.2 V, 3.3 V, 3.4 V, 3.5 V, 3.6 V, 3.7 V, 3.8 V, 3.9 V, 4 V, 4.1 V, 4.2 V, 4.3 V, 4.4 V and 4.5 V, or any range of values therebetween. In some embodiments, the energy storage device is operated at an applied voltage of about 2.7-4.3V. In some embodiments, the energy storage device is subjected to a charge rate of about 0.05 C, 0.06 C, 0.07 C, 0.08 C, 0.09 C, 0.1 C, 0.11 C, 0.12 C, 0.13 C, 0.14 C, 0.15 C, 0.16 C, 0.17 C, 0.18 C, 0.19 C, 0.2 C, 0.21 C, 0.22 C, 0.23 C, 0.24 C, 0.25 C, 0.26 C, 0.27 C, 0.28 C, 0.29 C, 0.3 C, 0.31 C, 0.32 C, 0.33 C, 0.34 C, 0.35 C, 0.36 C, 0.37 C, 0.38 C, 0.39 C, 0.4 C, 0.41 C, 0.42 C, 0.43 C, 0.44 C, 0.45 C, 0.46 C, 0.47 C, 0.48 C, 0.49 C, 0.5 C, 0.51 C, 0.52 C, 0.53 C, 0.54 C, 0.55 C, 0.56 C, 0.57 C, 0.58 C, 0.59 C, 0.6 C, 0.61 C, 0.62 C, 0.63 C, 0.64 C, 0.65 C, 0.66 C, 0.67 C, 0.68 C, 0.69 C, 0.7 C, 0.71 C, 0.72 C, 0.73 C, 0.74 C, 0.75 C, 0.76 C, 0.77 C, 0.78 C, 0.79 C, 0.8 C, 0.81 C, 0.82 C, 0.83 C, 0.84 C, 0.85 C, 0.86 C, 0.87 C, 0.88 C, 0.89 C, 0.9 C, 0.91 C, 0.92 C, 0.93 C, 0.94 C, 0.95 C, 0.96 C, 0.97 C, 0.98 C, 0.99 C and 1 C, or any range of values therebetween.

In some embodiments, the energy storage device is subjected to a discharge rate of about 0.05 C, 0.06 C, 0.07 C, 0.08 C, 0.09 C, 0.1 C, 0.11 C, 0.12 C, 0.13 C, 0.14 C, 0.15 C, 0.16 C, 0.17 C, 0.18 C, 0.19 C, 0.2 C, 0.21 C, 0.22 C, 0.23 C, 0.24 C, 0.25 C, 0.26 C, 0.27 C, 0.28 C, 0.29 C, 0.3 C, 0.31 C, 0.32 C, 0.33 C, 0.34 C, 0.35 C, 0.36 C, 0.37 C, 0.38 C, 0.39 C, 0.4 C, 0.41 C, 0.42 C, 0.43 C, 0.44 C, 0.45 C, 0.46 C, 0.47 C, 0.48 C, 0.49 C, 0.5 C, 0.51 C, 0.52 C, 0.53 C, 0.54 C, 0.55 C, 0.56 C, 0.57 C, 0.58 C, 0.59 C, 0.6 C, 0.61 C, 0.62 C, 0.63 C, 0.64 C, 0.65 C, 0.66 C, 0.67 C, 0.68 C, 0.69 C, 0.7 C, 0.71 C, 0.72 C, 0.73 C, 0.74 C, 0.75 C, 0.76 C, 0.77 C, 0.78 C, 0.79 C, 0.8 C, 0.81 C, 0.82 C, 0.83 C, 0.84 C, 0.85 C, 0.86 C, 0.87 C, 0.88 C, 0.89 C, 0.9 C, 0.91 C, 0.92 C, 0.93 C, 0.94 C, 0.95 C, 0.96 C, 0.97 C, 0.98 C, 0.99 C and 1 C, or any range of values therebetween.

In some embodiments, the energy storage device comprises an electrochemical capacity of, of about, of at least, or of at least about, 185 mAh/g, 190 mAh/g, 195 mAh/g, 200 mAh/g, 205 mAh/g, 210 mAh/g, 215 mAh/g, 220 mAh/g, 225 mAh/g, 230 mAh/g, 235 mAh/g, 240 mAh/g, 245 mAh/g and 250 mAh/g, or any range of values therebetween. In some embodiments, the energy storage device comprises an electrochemical capacity of about 185-205 mAh/g during a charge rate of about 1 C at an applied voltage of about 2.7-4.3 V. In some embodiments, the energy storage device comprises an electrochemical capacity of about 205-220 mAh/g during a discharge rate of about 0.33 C at an applied voltage of about 2.7-4.3 V. In some embodiments, the energy storage device comprises an electrochemical capacity of about 225-235 mAh/g during a discharge rate of about 0.05 C at an applied voltage of about 2.7-4.3 V. In some embodiments, the energy storage device comprises an electrochemical capacity of about 240-250 mAh/g during a charge rate of about 0.05 C at an applied voltage of about 2.7-4.3 V.

EXAMPLES

Example embodiments of the present disclosure, including processes, materials and/or resultant products, are described in the following examples.

Example 1 - Thermogravimetric analysis (TGA) and differential scanning calorimetry (DSC)

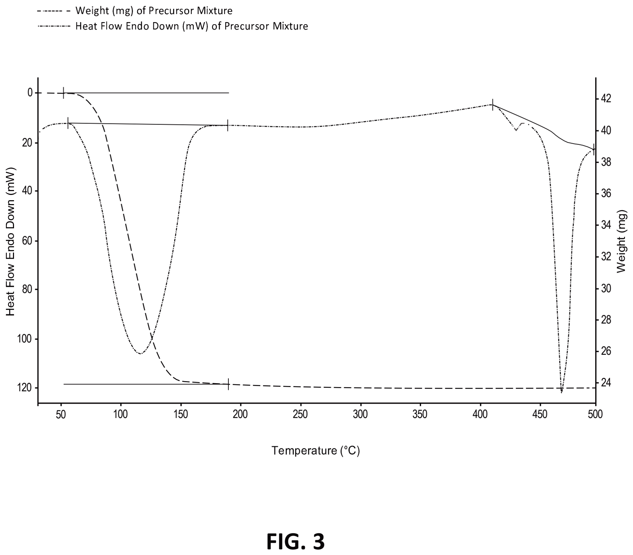

FIG. 3 is a graph showing thermogravimetric analysis (TGA) and differential scanning calorimetry (DSC) of a precursor mixture including lithium hydroxide monohydrate (LiOH•$H_2$O) and an NMC-oxide. As shown in FIG. 3, the precursor mixture demonstrated removal of water from the lithium hydroxide monohydrate at about 60-190°C (peak at about 116°C) and melting of the lithium hydroxide at about 400-490°C (peaks at about 425°C and 468°C).

Example 2 - Scanning Electron Microscopy (SEM) Analysis of Precursor Mixtures

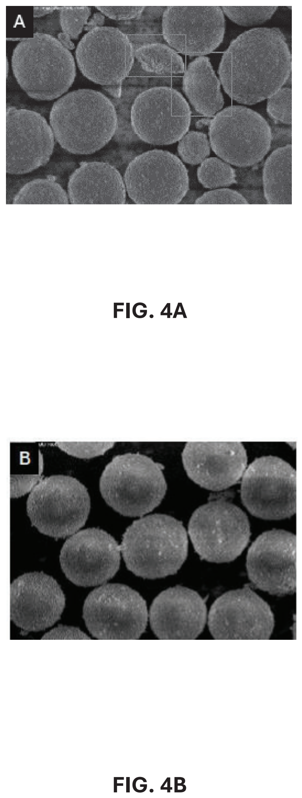

A precursor mixture was prepared by mixing an NMC-oxide with a $D_{50}$ particle size distribution of about 10-20 $\mu$m and lithium hydroxide powder. FIGS. 4A and 4B are SEM images of a precursor mixture formed using various mixing intensities and durations. As shown in FIG. 4A, constant mixing intensities of about 1000 rpm and durations of about 30 minutes resulted in broken active material precursor particles due to large unmilled lithium hydroxide powder. In contrast, as shown in FIG. 4B, reduced mixing intensities of about 500 rpm and durations less than about 30 minutes with unmilled lithium hydroxide powder resulted in uniform precursor mixtures, avoiding active material precursor breakages.

Example 3 - Scanning Electron Microscopy (SEM) Analysis of Cathode Active Materials

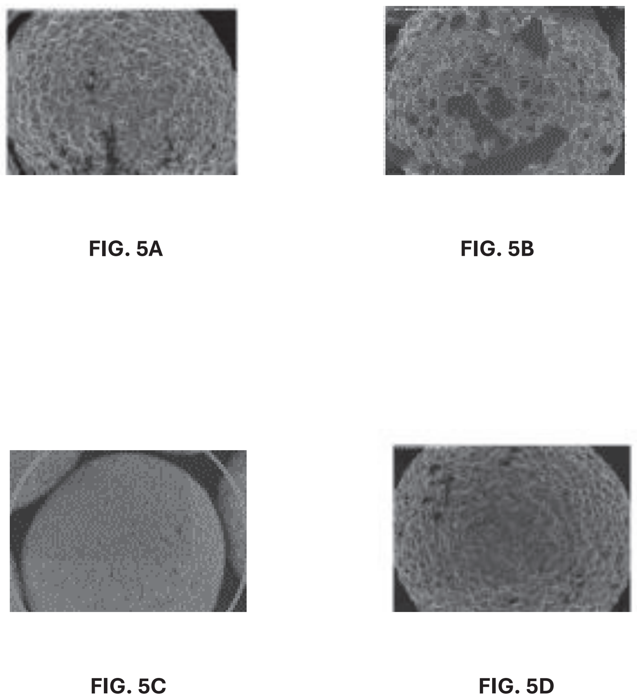

FIGS. 5A-5D are SEM images of a cathode active material formed with milled or unmilled lithium hydroxide utilizing various temperature profiles. FIG. 5A shows a uniform electrode active material formed with milled lithium hydroxide where the milled lithium hydroxide and a polycrystalline NMC precursor were sintered to a sintering temperature directly after mixing. FIGS. 5B and 5C show electrode active materials formed with unmilled lithium hydroxide where the unmilled lithium hydroxide and a polycrystalline NMC precursor were sintered to a sintering temperature of about 800°C directly after mixing. FIG. 5B shows an over-lithiated (i.e., excess amounts of lithium hydroxide) NMC material, and FIG. 5C shows an under-lithiated NMC material. In contrast, FIG. 5D shows an electrode active material formed with unmilled lithium hydroxide utilizing preheating, homogenizing and sintering temperatures consecutively after the unmilled lithium hydroxide and a polycrystalline NMC precursor were mixed. As shown in FIG. 5D, the use of the preheating and/or homogenizing temperatures prior to sintering resulted in the formation of uniform NMC electrode active materials, and surprisingly such results were achieved with unmilled lithium hydroxide.

Example 4 - Electrochemical Capacity of Energy Storage Devices

Table A below shows electrochemical capacities of energy storage devices and amounts of residual $Li_2CO_3$ and LiOH comparing devices and active materials formed by utilizing different combinations of milled lithium hydroxide, unmilled lithium hydroxide, heating to a homogenizing temperature, and/or heating to a sintering temperature. The active materials of Tests 1A and 2A were formed using unmilled lithium hydroxide and a sintering temperature; the active material of Test 1B was formed using milled lithium hydroxide and a sintering temperature; and the active materials of Tests 2B-1 and 2B-2 were formed using unmilled lithium hydroxide and utilizing homogenizing and sintering temperatures. The energy storage devices formed from active materials of Tests 1A, 1B, 2A and 2B-1 and 2B-2 were operated at a voltage range of about 2.7-4.3V.

Table A

| Test | 1A | 2A | 1B | 2B-1 | 2B-2 |
|---|---|---|---|---|---|
| $Li_2CO_3$ (ppm) | 871 | 1131 | 2016 | 3321 | 2643 |
| LiOH (ppm) | 1408 | 1457 | 1751 | 1703 | 1608 |
| 0.05C Charge (mAh/g) | 242.7 | 243 | 245.3 | 244.1 | 245.3 |
| 0.05C Discharge (mAh/g) | 220.2 | 221.7 | 224.6 | 222.3 | 224.5 |
| 0.33C Discharge (mAh/g) | 202.8 | 204 | 207 | 205.2 | 207 |
| 1C Charge (mAh/g) | 194.8 | 195.6 | 198.4 | 196.9 | 198.2 |

Tests 1A and 2A show that energy storage devices formed with unmilled lithium hydroxide resulted in lower electrochemical capacities and the active materials formed demonstrated decreased residual lithium hydroxide relative to Test 1B showing an energy storage device and active material formed with milled LiOH. The lower electrochemical capacities from Tests 1A and 2A relative to Test 1B may be attributed to cathode active materials that are under-lithiated.

Tests 2B-1 and 2B-2 show that by utilizing a homogenizing temperature, energy storage devices and active materials formed with unmilled lithium hydroxide resulted in improved electrochemical capacities relative to Tests 1A and 2A showing an energy storage device and active material formed with unmilled LiOH and without a homogenization temperature. Tests 2B-1 and 2B-2 show that by utilizing a homogenizing temperature, energy storage devices and active materials formed with unmilled lithium hydroxide resulted in similar electrochemical capacities and similar amounts of residual $Li_2CO_3$ and LiOH relative to Test 1B showing an energy storage device and active material formed with milled LiOH and without a homogenization temperature heating.

While certain embodiments of the inventions have been described, these embodiments have been presented by way of example only, and are not intended to limit the scope of the disclosure. Indeed, the novel methods and systems described herein may be embodied in a variety of other forms. Furthermore, various omissions, substitutions and changes in the systems and methods described herein may be made without departing from the spirit of the disclosure. The accompanying claims and their equivalents are intended to cover such forms or modifications as would fall within the scope and spirit of the disclosure. Accordingly, the scope of the present inventions is defined only by reference to the appended claims.

Features, materials, characteristics, or groups described in conjunction with a particular aspect, embodiment, or example are to be understood to be applicable to any other aspect, embodiment or example described in this section or elsewhere in this specification unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The protection is not restricted to the details of any foregoing embodiments. The protection extends to any novel one, or any novel combination, of the features disclosed in this specification (including any accompanying claims, abstract and drawings), or to any novel one, or any novel combination, of the steps of any method or process so disclosed.

Furthermore, certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as a subcombination or variation of a subcombination.

Moreover, while operations may be depicted in the drawings or described in the specification in a particular order, such operations need not be performed in the particular order shown or in sequential order, or that all operations be performed, to achieve desirable results. Other operations that are not depicted or described can be incorporated in the example methods and processes. For example, one or more additional operations can be performed before, after, simultaneously, or between any of the described operations. Further, the operations may be rearranged or reordered in other implementations. Those skilled in the art will appreciate that in some embodiments, the actual steps taken in the processes illustrated and/or disclosed may differ from those shown in the figures. Depending on the embodiment, certain of the steps described above may be removed, others may be added. Furthermore, the features and attributes of the specific embodiments disclosed above may be combined in different ways to form additional embodiments, all of which fall within the scope of the present disclosure. Also, the separation of various system components in the implementations described above should not be understood as requiring such separation in all implementations, and it should be understood that the described components and systems can generally be integrated together in a single product or packaged into multiple products. For example, any of the components for an energy storage system described herein can be provided separately, or integrated together (e.g., packaged together, or attached together) to form an energy storage system.

For purposes of this disclosure, certain aspects, advantages, and novel features are described herein. Not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Conditional language, such as "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than 10% of, within less than 5% of, within less than 1% of, within less than 0.1% of, and within less than 0.01% of the stated amount, depending on the desired function or desired result.

The scope of the present disclosure is not intended to be limited by the specific disclosures of preferred embodiments in this section or elsewhere in this specification, and may be defined by claims as presented in this section or elsewhere in this specification or as presented in the future. The language of the claims is to be interpreted broadly based on the language employed in the claims and not limited to the examples described in the present specification or during the prosecution of the application, which examples are to be construed as non-exclusive.

**Claims**

1. A method of forming an electrode active material, comprising:

mixing a lithium source and an active material precursor to form a precursor mixture, wherein the lithium source comprises a $D_{50}$ particle size of at least about 150 $\mu m$;
heating the precursor mixture at a homogenizing temperature to form a homogenized mixture; and
sintering the homogenized mixture at a sintering temperature to form a final mixture comprising an electrode active material, wherein the homogenizing temperature is less than the sintering temperature.

2. The method of Claim 1, wherein the lithium source is selected from lithium hydroxide (LiOH), lithium hydroxide monohydrate (LiOH•$H_2O$), lithium carbonate ($Li_2CO_3$), $LiPO_3$, $Li_3PO_3$, $Li_3PO_4$, $LiH_2PO_4$, $Li_2HPO_4$, $LiH_2PO_3$, $Li_2H$-$PO_3$, and combinations thereof.

3. The method of Claim 1 or 2, wherein the homogenizing temperature is about 250-500°C.

4. The method of any one of Claims 1-3, wherein heating is performed for about 0.1-3 hours.

5. The method of any one of Claims 1-4, further comprising preheating the precursor mixture at a preheating temperature, wherein the preheating temperature is less than the homogenizing temperature and the sintering temperature, preferably wherein the preheating temperature is about 200-300°C and/or wherein the precursor mixture is preheated at the preheating temperature for about 0.1-3 hours.

6. The method of any one of Claims 1-5, wherein the sintering temperature is about 700-900°C and/or wherein the final mixture is sintered at the sintering temperature for about 8-14 hours.

7. The method of any one of Claims 1-6, wherein the electrode active material comprises at most about 5 wt.% excess lithium source.

8. The method of any one of Claims 1-7, wherein the electrode active material comprises a $D_{50}$ particle size distribution of about 2-8 $\mu$m.

9. The method of any one of Claims 1-8, wherein the electrode active material is a cathode active material, preferably wherein the cathode active material is selected from the group consisting of a metal oxide, metal sulfide, a sulfur-carbon composite, a lithium metal oxide, a material including sulfur, and combinations thereof, and/or wherein the cathode active material is selected from the group consisting of a lithium iron phosphate, lithium manganese iron phosphate, lithium nickel manganese cobalt oxide, lithium nickel cobalt aluminum oxide, lithium manganese oxide, lithium nickel manganese oxide, lithium cobalt oxide, and combinations thereof.

10. The method of any one of Claims 1-9, wherein mixing of the lithium source and the active material precursor to form the precursor mixture is performed by low-shear mixing.

11. A method of forming an electrode film, comprising:

    forming the electrode active material according to the method of any one of Claims 1-10;
    combining the electrode active material with a binder to form an electrode film mixture; and
    forming an electrode film from the electrode film mixture.

12. A method of forming an energy storage device, comprising:

    forming the electrode film according to the method of Claim 11;
    forming a cathode comprising disposing the electrode film over a current collector; and
    disposing the cathode, an anode, and an electrolyte within a housing to form the energy storage device.

13. A precursor mixture used to form an electrode active material, comprising:

    a lithium source, wherein the lithium source comprises a $D_{50}$ particle size of at least about 150 $\mu$m; and
    an active material precursor.

14. The precursor mixture of Claim 13, wherein the lithium source comprises a $D_{50}$ particle size of about 150-800 $\mu$m and/or wherein the active material precursor comprises a $D_{50}$ particle size of about 2-20 $\mu$m.

15. The precursor mixture of Claim 13 or 14, wherein the active material precursor is selected from the group consisting of a metal hydroxide, a metal oxide, lithium mixed metal oxides, and combinations thereof, and/or wherein the active material precursor comprises a metal element selected from the group consisting of nickel, manganese, cobalt, aluminum, magnesium, zirconium, yttrium, titanium, vanadium, molybdenum, and combinations thereof.

100

120

| Mix a lithium source and an active material precursor to form a precursor mixture | 110 |

Preheat the precursor mixture at a preheating temperature

| Heat the precursor mixture at a homogenizing temperature to form a homogenized mixture | 130 |

Process homogenized mixture

140

| Sinter homogenized mixture at a sintering temperature | 150 |

| Form final mixture comprising an electrode active material | 160 |

Process final mixture comprising the electrode active material 170

**FIG. 1**

**FIG. 2A**

**FIG. 2B**

**FIG. 2C**

**FIG. 3**

**FIG. 4A**

**FIG. 4B**

**FIG. 5A**

**FIG. 5B**

**FIG. 5C**

**FIG. 5D**

**EUROPEAN SEARCH REPORT**

Application Number

EP 25 21 0749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 3 770569 B2 (NIPPON CHEMICAL IND) 26 April 2006 (2006-04-26) * examples * | 1-15 | INV. C01G53/42 H01M4/525 |
| X | US 6 241 959 B1 (CHO JAE-PHIL [KR] ET AL) 5 June 2001 (2001-06-05) * examples * | 1-15 | |
| X | CN 113 036 095 B (HUNAN SHANSHAN ENERGY TECH CO LTD) 24 January 2023 (2023-01-24) * examples * | 1-15 | |

TECHNICAL FIELDS
SEARCHED (IPC)

C01G
H01M

The present search report has been drawn up for all claims

| Place of search | Date of completion of the search | Examiner |
|---|---|---|
| Munich | 8 April 2026 | Marucci, Alessandra |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 0749

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2026

| Patent document cited in search report | | Publication date | Patent family member(s) | | Publication date |
|---|---|---|---|---|---|
| JP 3770569 | B2 | 26-04-2006 | JP | 3770569 B2 | 26-04-2006 |
| | | | JP | H1081519 A | 31-03-1998 |
| US 6241959 | B1 | 05-06-2001 | CN | 1216289 A | 12-05-1999 |
| | | | DE | 19849343 A1 | 02-06-1999 |
| | | | JP | 4100785 B2 | 11-06-2008 |
| | | | JP | H11246225 A | 14-09-1999 |
| | | | US | 6241959 B1 | 05-06-2001 |
| | | | US | 2001028874 A1 | 11-10-2001 |
| CN 113036095 | B | 24-01-2023 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 94678024